# EUROPEAN PATENT APPLICATION

(11) **EP 2 385 271 A1**
(43) Date of publication of application: **09.11.2011**
(21) Application number: 10162060.7
(22) Date of filing: 05.05.2010
(51) Int. Cl.: F16H 7/08, F16H 7/12

(54) **A tension regulator with a pressure vessel applied to a timing belt**

(71) Applicant: Gong Shun Technology Co., Ltd., Kaohsiung County 820 (TW)
(72) Inventor: Wang, Guan-Ren, Kaohsiung County 820 (TW)
(74) Representative: Chaillot, Geneviève

(57) **Abstract**

A tension regulator (3) with a pressure vessel (34) applied to a timing belt installs a pressure vessel (34) between a body (31) and a propelling device (32). By means of a moving space (343) being defined in the pressure vessel (34), the propelling device (32) could be accommodated and moved therein. Accordingly, the hydraulic oil (35) would not readily escape from the body (31), and a using safety could be assured.

## Description

### BACKGROUND OF THE INVENTION

### 1. Field of the Invention

The present invention relates to a tension regulator, particularly to a tension regulator with a pressure vessel applied to a timing belt.

### 2. Description of the Related Art

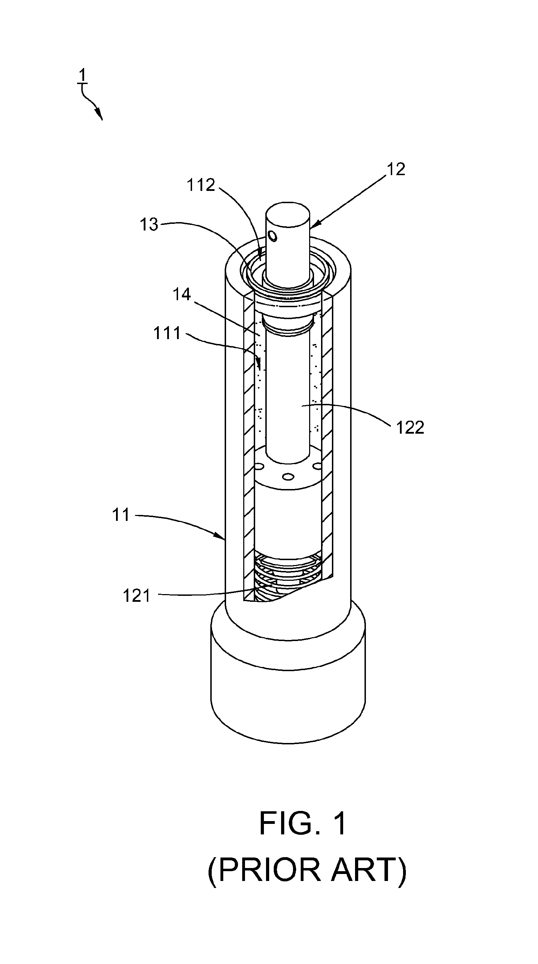

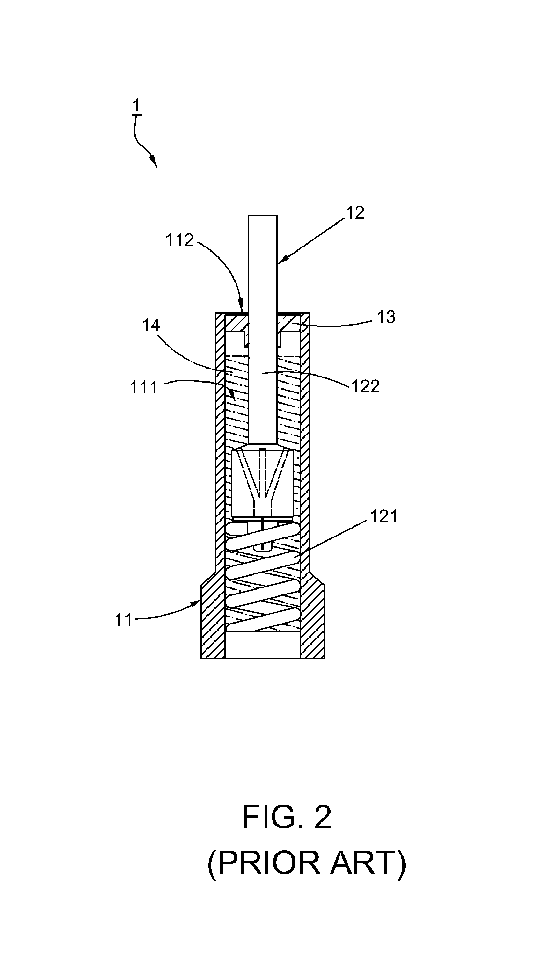

Referring to Figs. **1** and **2****,** a conventional tension regulator **1** applied to a timing belt comprises a body **11,** a propelling device **12** disposed in the body **11,** and a blocking device **13** disposed for sealing the body **11** as well as blocking the propelling device **12.** Wherein, the body **11** has a sliding space **111** defined therein for hydraulic oil **14** to fill, and an opening **112** formed on the body **11** for the sliding space **111** to communicate with an exterior therethrough. Moreover, the propelling device **12** has an elastic member **121** elongated into the sliding space **111,** and a propelling member **122** stretched within the sliding space **111** for being propelled by the elastic member **121.**

Referring to Fig. **2****,** a timing belt (not shown) is propelled by the tension regulator **1;** that is, the propelling member **122** is driven by the elasticity of the elastic member **121,** so that a part of the propelling member **122** protruded out of the blocking device **13** is able to thrust the timing belt with proper pressure via a belt idler (not shown). Afterward, the propelling member **122** would retract to engage with the elastic member **121** in accordance with the tense state of the timing belt, so that the propelling member **122** propelled by the belt idler and the timing belt could properly resume the action for a next thrust.

However, the conventional tension regulator **1** has the following shortcomings:
1. The manufacturing of the body **11** of the tension regulator **1** generally involves a die-casting formation means. However, the die-cast product substantially possesses the lower density than that of the alloy in view of their different forming manners. Herein, there are tiny interstices facilely formed on the die-cast product. Especially, if the body **11** is made of the aluminum alloy, more tiny interstices will be formed. Wherein, because of the adverse interstices, the hydraulic oil **14** sealed in the body **11** readily leaks out either in time of the propelling device **12** being motivated or even under a motionless condition. As time passes, the leakage of the hydraulic oil **14** thence incurs an insufficient oil amount, and the operation of the propelling device **12** could not be precisely achieved.
2. The leakage of the hydraulic oil **14** incurring the insufficient oil amount is unable to be refilled, thereby resulting in a short lifespan of the tension regulator **1.** Thus, such tension regulator **1** has to be replaced regularly, or the driving safety would be influenced. Herein, if users insist on refilling the hydraulic oil **14,** they have to firstly remove the blocking device **13.** As to sealing the hydraulic oil **14** with the blocking device **13,** a professional machine should be applied for achieving the operation. Obviously, such procedure and fabrication involve a complicated and professional technology; ordinary users are unable to readily execute the operation by themselves.

### SUMMARY OF THE INVENTION

The object of the present invention is to provide a tension regulator with a pressure vessel applied to a timing belt, which effectively prevents the hydraulic oil from leakage so as to promote the using safety.

The tension regulator with a pressure vessel applied to a timing belt in accordance with the present invention comprises a body, a propelling device disposed in the body, and a blocking device disposed for sealing the body as well as limiting the propelling device in the body. Wherein, a pressure vessel installed between the body and the propelling device includes a moving space enveloped by a circumferential wall and a bottom wall. Moreover, the pressure vessel further defines a second opening opposite to the bottom wall, thereby allowing the moving space to communicate with an exterior via the second opening. Whereby, the propelling device is set and moved within the moving space, and the hydraulic oil fills the moving space. Consequently, the pressure vessel effectively averts the hydraulic oil from leakage, and the using safety is assured.

In this connection, the tension regulator with a pressure vessel applied to a timing belt as claimed includes a body filled with hydraulic oil, a propelling device installed in the body, and a blocking device disposed for sealing the body and limiting the propelling device in the body. Wherein, the body includes a sliding space one side thereof that is communicated with an exterior via a first opening defined thereon. The first opening is sealed by the blocking device. The propelling device has an elastic member and a propelling member driven by the elastic member. A part of the propelling member is protruded out of the blocking device. Particularly, a pressure vessel is mounted between the body and the propelling device and comprised of a moving space enveloped by a circumferential wall and a bottom wall. The pressure vessel further forms a second opening opposite to the bottom wall, thereby permitting the moving space to communicate with the exterior via the second opening. Moreover, the moving space filled up with the hydraulic oil is defined for the propelling device to be accommodated and moved therein.

Preferably, the bottom wall of the pressure vessel further defines a filling hole that penetrates through the body and communicates with the exterior, and a sealing member is disposed on the filling hole for executing the sealing.

The advantages of the present invention over the known prior arts will become more apparent to those of ordinary skilled in the art upon reading the following descriptions in junction with the accompanying drawings.

### BRIEF DESCRIPTION OF THE DRAWINGS

Fig. **1** is a schematic view showing a conventional tension regulator;
Fig. **2** is a schematic view showing the conventional tension regulator in using;
Fig. **3** is a perspective view showing a first preferred embodiment of the present invention;
Fig. **4** is a cross-sectional view of the first preferred embodiment; and
Fig. **5** is a schematic view showing a second preferred embodiment of the present invention.

### DETAILED DESCRIPTION OF THE PREFERRED EMBODIMENTS

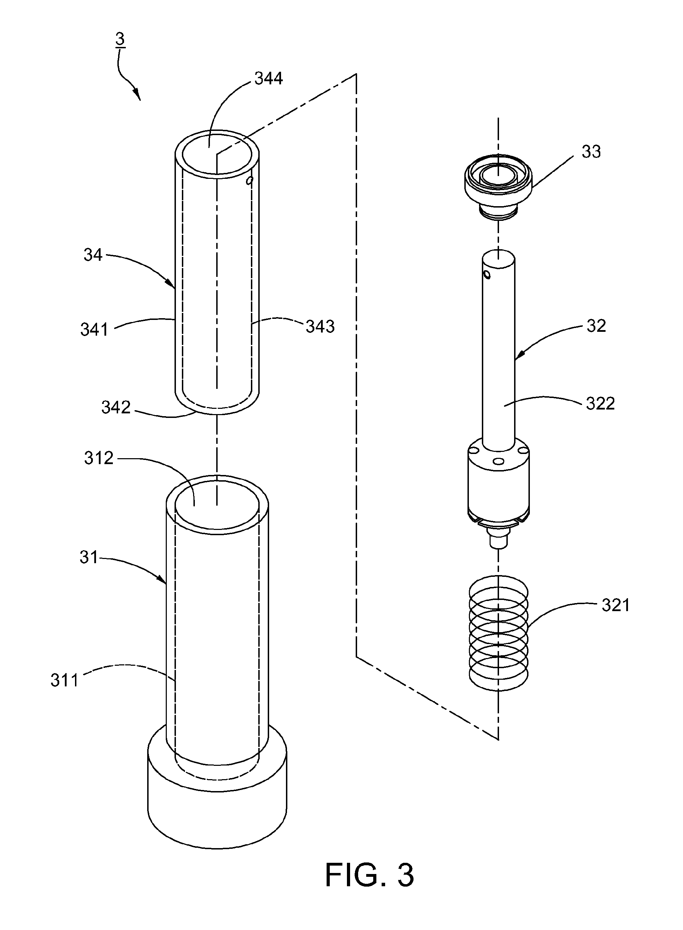

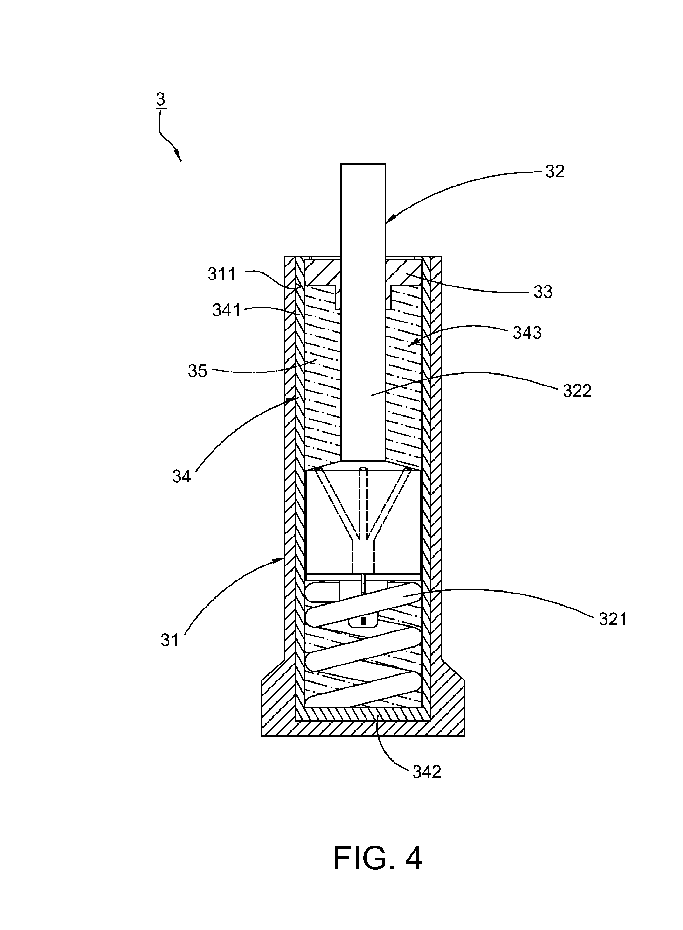

Figs. **3** and **4** show a first preferred embodiment of the present invention, a tension regulator **3** comprising a body **31,** a propelling device **32** installed inside the body **31,** and a blocking device **33** disposed for sealing the body **31** and limiting the propelling device **32** in the body **31.** Wherein, the body **31** defines a sliding space **311,** of which one side communicates with an exterior via a first opening **312** defined on the body **31.** Herein, the first opening **312** could be sealed by the blocking device **33.**

A pressure vessel **34** disposed between the body **31** and the propelling device **32** has a moving space **343** enveloped by a circumferential wall **341** and a bottom wall **342.** Wherein, the pressure vessel **34** is preferably formed into a seamless status, for example, the circumferential wall **341** and the bottom wall **342** of the pressure vessel **34** could be made by a plastic or an alloy plate subjected to a bend formation. Alternatively, directly processing the alloy steel to form the pressure vessel **34** is also available. In this embodiment, the pressure vessel **34** is made of the alloy steel and adopts the direct process formation. Further, the pressure vessel **34** correspondingly forms a second opening **344** opposite to the bottom wall **342,** so that the moving space **343** is able to communicate with the exterior via the second opening **344.** The moving space **343** is defined for the propelling device **32** to be accommodated and moved therein, and the hydraulic oil **35** fills the moving space **343.** Additionally, the propelling device **32** provides with an elastic member **321** disposed inside the moving space **343** and a propelling member **322** driven thereby. Part of the propelling member **322** is protruded out of the blocking device **33.**

Referring to Figs. **3** and **4****,** in fabricating the tension regulator **3,** the propelling device **32** would be installed inside the pressure vessel **34;** afterward, the moving space **343** would be filled up with the hydraulic oil **35.** Accordingly, a complete fabrication of the product is preferably furnished by setting the pressure vessel **34** in the sliding space **311** of the body **31** and sealing the second opening **344** with the blocking device **33.** Further, the pressure vessel **34** preferably adopts either a plastic material or an alloy material for being allowed to be bent; or an alloy steel material is directly processed to form the pressure vessel **34.** Thereby, the pressure vessel **34** comprises a seamless formation. Herein this embodiment, the pressure vessel **34** adopts the alloy steel material that is directly processed to form the seamless contour thereof. Accordingly, in virtue of the seamless pressure vessel **34** installed in the body **31,** the tension regulator **3** substantially prevents the hydraulic oil **35** in the moving space **343** from the outflow. While not in operation, namely the propelling member **322** stops thrusting against the timing belt, the hydraulic oil **35** would be blocked by the pressure vessel **34** for reducing the leakage. Even if the hydraulic oil **35** is compressed by the propelling member **322** to scatter around in the moving space **343** as a result of an increasing pressure while the propelling member **322** executes its thrusting action, the hydraulic oil **35** is still preferably retained in the moving space **343** of the seamless pressure vessel **34.** Thus, the hydraulic oil **35** does not escape from interstices formed on the body **31** even if it is compressed, thereby ensuring the using safety. The tension regulator **3** also accomplishes a smooth operation.

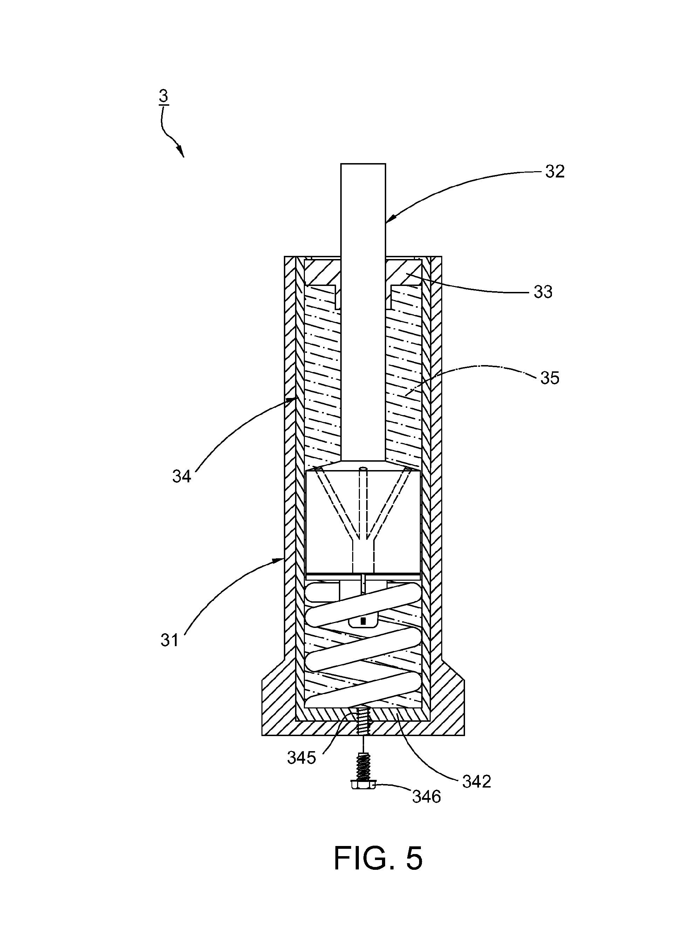

Referring to Fig. **5****,** a second preferred embodiment of the present invention is shown. The tension regulator **3** comprises the similar elements as those in the first preferred embodiment; namely, the tension regulator **3** substantially comprises a body **31,** a propelling device **32,** a blocking device **33,** and a pressure vessel **34.** The concatenation of associated elements and applications same to those of the first preferred embodiment are herein omitted. Differently, the pressure vessel **34** in this embodiment further defines a filling hole **345** on a bottom wall **342** thereof for penetrating through the body **31** and communicating with the exterior; wherein, the filling hole **345** is sealed by a blocking member **346.** Accordingly, if the pressure vessel **34** contains insufficient hydraulic oil **35,** the blocking member **346** will be timely removed for users to swiftly replenish the oil through the filling hole **345,** thereby guaranteeing the tension regulator **3** to constantly maintain an adequate amount of hydraulic oil **35.**

To sum up, the present invention takes advantage of the pressure vessel to be formed between the body and the propelling device for averting the hydraulic oil from seeping, thereby achieving the object of the present invention.

While we have shown and described the embodiment in accordance with the present invention, it should be clear to those skilled in the art that further embodiments may be made without departing from the scope of the present invention.

## Claims

1. A tension regulator (3) with a pressure vessel applied to a timing belt comprising a body (31) filled with hydraulic oil (35), a propelling device (32) installed in said body (31), and a blocking device (33) disposed for sealing said body (31) and limiting said propelling device (32) in said body (31); wherein, said body (31) including a sliding space (311) one side thereof communicated with an exterior via a first opening (312) defined thereon; said first opening (312) being sealed by said blocking device (33); said propelling device (32) including an elastic member (321) and a propelling member (322) driven by said elastic member (321); a part of said propelling member (322) being protruded out of said blocking device (33) ;
**characterized in that** a pressure vessel (34) mounted between said body (31) and said propelling device (32) including a moving space (343) enveloped by a circumferential wall (341) and a bottom wall (342); said pressure vessel (34) further forming a second opening (344) opposite to said bottom wall (342), thereby permitting said moving space (343) to communicate with said exterior via said second opening (344); said moving space (343) being defined for said propelling device (32) to be accommodated and moved therein, and said moving space (343) being filled up with said hydraulic oil (35).

2. The tension regulator as claimed in claim 1, wherein said bottom wall (342) defines a filling hole (345) that penetrates through said body (31) and communicates with said exterior, and a sealing member (346) is disposed on said filling hole (345) for sealing.
